Europäisches Patentamt

European Patent Office

Office européen des brevets

(19)

(11) Veröffentlichungsnummer: **0 243 388**

**B1**

(12) **EUROPÄISCHE PATENTSCHRIFT**

(45) Veröffentlichungstag der Patentschrift: **26.09.90**

(51) Int. Cl.⁵: **C 11 C 1/04**

(21) Anmeldenummer: **86905809.9**

(22) Anmeldetag: **10.10.86**

(86) Internationale Anmeldenummer:
**PCT/EP86/00582**

(87) Internationale Veröffentlichungsnummer:
**WO 87/02378 23.04.87 Gazette 87/09**

(54) ANLAGE ZUR KONTINUIERLICHEN FETTSPALTUNG.

(30) Priorität: **18.10.85 DE 3537139**

(43) Veröffentlichungstag der Anmeldung:
**04.11.87 Patentblatt 87/45**

(45) Bekanntmachung des Hinweises auf die
Patenterteilung:
**26.09.90 Patentblatt 90/39**

(84) Benannte Vertragsstaaten:
**AT BE CH DE FR IT LI NL**

(56) Entgegenhaltungen:
**CH-A- 266 640**
**FR-A- 822 503**

**Journal of American Oil Chemists Society,
March 1948, Champaign, I11. (US) H.L.Barnebey
et al.: "Continuous fat splitting plants using the
Colgate-Emery process", pages 95-99**

(73) Patentinhaber: **Henkel Kommanditgesellschaft
auf Aktien
Postfach 1100 Henkelstrasse 67
D-4000 Düsseldorf-Holthausen (DE)**

(72) Erfinder: **BROCKMANN, Rolf
Falkenweg 10
D-4018 Langenfeld (DE)**
Erfinder: **JEROMIN, Lutz
Am Bandsbusch 88
D-4010 Hilden (DE)**
Erfinder: **JOHANNISBAUER, Wilhelm
Erich-Kästner-Strasse 26
D-4006 Erkrath (DE)**
Erfinder: **MICHEL, Otto
Am Bendenbusch 11
D-4018 Langenfeld (DE)**
Erfinder: **SCHREIBER, Dibold
Corellistrasse 15
D-4000 Düsseldorf 13 (DE)**
Erfinder: **SKRAPAC, Franjo 7 Fifth Avenue
Mount Lawley 6050
Perth, W.A. 6000 (AU)**

Courier Press, Leamington Spa, England.

**Beschreibung**

Die Erfindung betrifft eine Anlage zur Kontinuierlichen Fettspaltung mit einem für bei etwa 5 MPa und etwa 260°C im Gegenstrom zu aufsteigendem Fett fallendem Wasser ausgelegten Kolonnenrohr einer Spaltkolonne, welche am Sumpf einen Fetteinlaß und einen Glycerinwasserauslaß sowie am Kopf einen Wassereinlaß und einen Fettsäureauslaß besitzt, mit Einbauten und mit mindestens einem Heizabschnitt zum Aufheizen im Gegenstrom bewegten Reaktanten.

Im Sinne der organischen Chemie werden hier unter dem Begriff "Fett" auch Öle verstanden. Für die im vorliegenden Zusammenhang vorgesehene Fettspaltung werden im allgemeinen nur Fette nativen Ursprungs eingesetzt. Die Fette werden durch Zugabe von Wasser in Glycerin und Fettsäure gespalten. Die Spaltung kann diskontinuierlich in Rührautoklaven oder kontinuierlich in Spaltkolonnen mit oder ohne Katalysator ausgeführt werden. Die Fettspaltung erfolgt heute vor allem in Spaltkolonnen, welche von den beiden flüssigen Reaktanten, nämlich Wasser und Fett, im Gegenstrom passiert werden. Die ersten kontinuierlichen Verfahren mit Gegenstrom von Fett und Wasser werden in den US-PS 21 56 863 und 21 59 397 sowie in der DE-PS 657 938 beschrieben. Nach den Angaben in der FR-PS 924 906 können am Austritt der Fettsäure einige Böden zur Wärmerückgewinnung vorgesehen werden. Spaltkolonnen der beschriebenen Art arbeiten nach den Angaben in "Bailey's Industrial Oil and Fat Products", John Wiley & Sons, New York, Band 2, 4. Auflage, Seite 108 bis 110, bei 5 MPa und etwa 260°C mit Verweilzeiten von 2 bis 3 Stunden in der Kolonne. Das Wasser-zu-Fett-Verhältnis beträgt 40 bis 50%. Es werden Kolonnendurchmesser von 500 bis 1200 mm und Kolonnenhöhen von 18 bis 24 m vorgesehen. Zum Beheizen wird Direktdampf eingespritzt. In solchen Kolonnen können nach den Angaben in der Zeitschrift "J. Am. Oil Chem. Soc." 29 (1952), 490 bis 495, Spaltgrade von 97 bis 99% und Glycerinkonzentrationen von 13 bis 18% erreicht werden.

Allgemein wird angestrebt, die Fettspaltung durch höhere Spaltgrade, geringeren Wasserüberschuß und kürzere Verweilzeit zu verbessern. Höhere Spaltgrade bedeuten eine entsprechend verbesserte Ausbeute des Verfahrens; auch werden die auf die Spaltung folgenden Fettsäure-Verarbeitungsschritte, nämlich die Destillation, Fraktionierung und Veresterung bei geringerem Anteil ungespaltenem Materials günstig beeinflußt. Ein verminderter Wasserüberschuß führt zu höheren Glycerinkonzentrationen und damit geringeren Aufarbeitungskosten für das herzustellende Glycerin. Eine kürzere Verweilzeit erlaubt eine Durchsatzsteigerung in vorhandenen Spaltkolonnen bzw. verminderte Abmessungen und damit einen geringeren Herstellungsaufwand zum Bau der Kolonnen.

Eine Anlage eingangs genannter Art ist aus der CH-A-266 640 bekannt. Bei dieser bekannten Anlage zur kontinuierlichen Fettspaltung führen die Einbauten, insbesondere die Füllkörperschüttung in der Kolonne zu einem guten Stofftransport von Wasser in die Fettphase und von Glycerin in die Wasserphase, aber es ist dennoch anzustreben, die Geschwindigkeit dieses Stofftransportes noch erheblich zu steigern.

Der Erfindung liegt damit die Aufgabe zugrunde, die Geschwindigkeit des Stofftransportes von Wasser in die Fettphase und von Glycerin in die Wasserphase gegenüber den bekannten Anlagen und Verfahren erheblich zu steigern.

Diese Aufgabe wird dadurch gelöst, daß das Kolonnenrohr für etwa 5 MPa ausgelegt ist, daß jeweils eine dem Einlaß vorgeschaltete Heizung und Druckpumpe bzw. dem Auslaß nachgeschaltetes Entspannungs- und Kühlmittel vorgesehen sind, daß mehrere, Einbauten aufweisende Abschnitte und Heizabschnitte in Längsrichtung des Kolonnenrohrs aufeinander folgen, daß die Einbauten ein freies Volumen von mindestens 90% aufweisen und daß wenigstens einer der beiden im Gegenstrom bewegten Flüssigkeiten direkt oder über die Einbauten Mittel zum pulsierenden Bewegen der Reaktanten zugeordnet sind.

Der Erfindung liegt die Erkenntnis zugrunde, daß durch die eingangs genannten, vor allem durch die Temperaturführung begründeten Verbesserungen der Hochdruckspaltung mit Senkung der Verweilzeit auf cirka 2,5 Stunden die Geschwindigkeit des Stofftransportes von Wasser in die Fettphase und von Glycerin in die Wasserphase wichtiger als die eigentliche Reaktionsgeschwindigkeit ist. Es gelingt erfindungsgemäß, den Stofftransport durch dauernde Umlenkung, Zerteilung, Wiederzusammenführung sowie dauernde Erneuerung der Grenzfläche von Wassertröpfchen einerseits und Fetteilchen andererseits ausreichen zu intensivieren, ferner einen idealen Gegenstrom von wässriger und organischer Phase einzustellen sowie axiale Rückvermischungen in der Kolonne zu vermeiden. Demgemäß sind bei Anwendung der Erfindung zugleich das Wasser/Fett-Verhältnis günstiger einzustellen, die Verweilzeit zu verkürzen und der Spaltgrad zu erhöhen.

Von erheblicher Bedeutung für die Wirkung der erfindungsgemäßen Kolonneneinbauten ist die Verwendung von Füllkörpern und Packungen, deren Lückenvolumen nur einen sehr kleinen Teil des Raktorvolumens einnimmt. Die in die Kolonnen eingebauten Packungen können aus unregelmäßigen Füllkörperschüttungen, aus Siebböden oder aus regelmäßigen Packungen bestehen. Wesentlich ist lediglich die Wirkung auf die beiden Reaktanten. Die Einbauten müssen ein dauerndes Umlenken, Zerteilen und Wiederzusammenführen von Wasser und Fett bewirken und eine Rückvermischung vermeiden, um ein möglichst großes, treibendes Konzentrationsgefälle zwischen wässriger und organischer Phase zu erhalten.

Ein wesentliches Merkmal der Erfindung besteht auch darin, daß in der Kolonne auf die Abschnitte mit Einbauten Heizabschnitte und/oder umgekehrt folgen.

Weiter wird vorgeschlagen, daß die Heizabschnitte mit Wärmeträgeröl betriebene Wärmeaustauscher zum indirekten Beheizen der Reaktanten erhalten. Eine indirekte Beheizung der Reaktanten mittels elektrischer Heizer ist zwar aus Journal of the American Oil Chemists Society, 1948, p. 95 — 99 bekannt, aber ein solches Beheizen ist im Gegensatz dazu wegen der hohen Kosten elektrischer Energie unwirtschaftlich. Das gleiche gilt für die in FR-A-822 503 vorgeschlagene interne elektrische Heizung.

Die Verwendung von Wärmetauschern mit Wärmeträgeröl ermöglicht den Bau der Anlage auch an Standorten, an denen Hochdruckdampf nicht zur Verfügung steht, trotzdem die optimal hohe Spalttemperatur eingestellt und aufrecht erhalten und außerdem wirtschaftlich gearbeitet werden soll.

Weitere vorteilhafte Ausgestaltungen sind in den übrigen Unteransprüchen enthalten.

Die Erfindung betrifft außerdem ein Verfahren zur kontinuierlichen Fettspaltung in einem für bei etwa 260°C im Gegenstrom zu aufsteigendem Fett fallendem Wasser ausgelegten, Einbauten aufweisenden Kolonnenrohr einer Spaltkolonne, deren Inhalt abschnittsweise aufgeheizt wird, wobei durch die Einbauten die in dem Kolonnenrohr sinkenden Wassertröpfchen permanent umgelenkt, zerteilt und wieder zusammengeführt werden und das in dem Kolonnenrohr aufsteigende Fett bei Unterdrücken einer Längsvermischung permanent mit den Wassertröpfchen radial vermischt wird. Die oben genannte Aufgabe wird hier dadurch gelöst, daß das Verfahren in einem für etwa 5 MPa ausgelegten Kolonnenrohr durchgeführt wird und daß die Reaktanten in eine pulsierende Bewegung versetzt werden. Dadurch wird die permanente Änderung der Grenzfläche zwischen den Flüssigkeiten noch beschleunigt.

Anhand der schematischen Darstellung in der Zeichnung werden Einzelheiten der Erfindung erläutert. Es zeigen:

Fig. 1 ein Blockschaltbild einer Fettspaltanlage;
Fig. 2 einen Ausschnitt einer Kolonne mit Heizabschnitt;
Fig. 3 einen Ausschnitt einer Kolonne mit bewegten Siebböden; und
Fig. 4 einen Kolonnensumpf mit angekoppelter Pulsationspumpe.

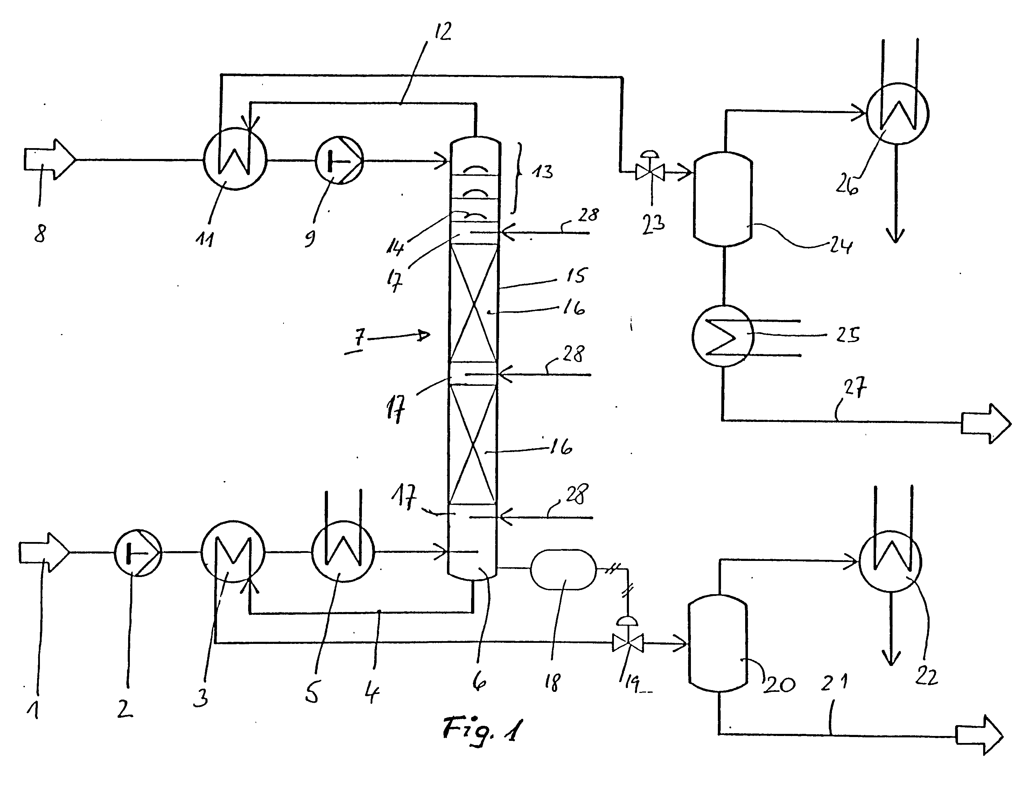

In dem Schema der Spaltkolonne nach Fig. 1 wird Einsatzfett 1 aus einem nicht dargestellten Tank mit Hilfe einer Druckpumpe 2 mit 5,0 bis 5,5 MPa über einen Wärmetauscher 3 durch Glycerinwasser 4 vorgewärmt und durch einen Spitzenerhitzer 5 auf eine Temperatur von 230 bis 240°C erwärmt in den Sumpf 6 einer insgesamt mit 7 bezeichneten Spaltkolonne eingespeist. Ebenso wird Spaltwasser 8, nämlich voll entsalztes Wasser oder Kondensat, über eine weitere Druckpumpe 9 auf den Kopf 10 der Spaltkolonne 7 gefördert. Zum Vorwärmen des Wassers wird in einen Wärmetauscher 11 die fühlbare Wärme der erzeugten Fettsäure 12 ausgenutzt. Im oberen Teil 13 der Spaltkolonne 7 werden Glockenböden 14 vorgesehen, die einen direkten Wärmeaustausch des zugeführten Wassers mit der erzeugten Fettsäure ermöglichen. Hierbei wird eine Temperatur von 240 bis 250°C erreicht. Alternativ kann das Spaltwasser 8 auch indirekt in einem zusätzlichen (nicht gezeichneten) Wärmetauscher aufgeheizt werden.

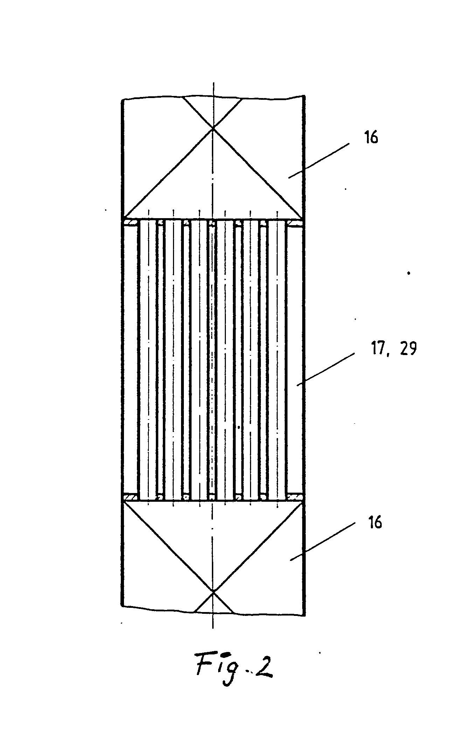

Das im oberen Teil 13 der Spaltkolonne 7 aufgeheizte Wasser wird von den Glockenböden 14 oder über eine (nicht gezeichnete) Ringbrause in das mit Fett gefüllte Kolonnenrohr 15 in Form von Tröpfchen gegeben. Das Kolonnenrohr 15 enthält nach Fig. 1 und 2 in Längsrichtung aufeinander folgende Packungsabschnitte 16 und ggf. Wärmetauscher aufweisende Heizabschnitte 17. Die Packungsabschnitte 16 werden mit regelmäßigen Packungen oder unegelmäßigen geschütteten Füllkörpern mit einem Lückenvolumen von wenigstens 90% gefüllt.

In den Packungsabschnitten 16 sinken die Wassertröpfchen aufgrund ihrer größeren Dichte durch die Fettphase nach unten und werden dabei an den Elementen der Packung umgelenkt, zerteilt und wieder zusammengeführt. Dadurch tritt eine dauernde Erneuerung der Grenzfläche und eine Quervermischung des Tropfenschwarms auf. Im Sumpf 6 werden die Tröpfchen gesammelt und über eine Trennschichtregelung 18 abgezogen. Gegebenenfalls nach Durchlaufen des Wärmetauschers 3 wird das Glycerinwasser 4 über ein Reduzierventil 19 in einen Behälter 20 gefördert bzw. auf Normaldruck entspannt. Im Anschluß an den Behälter 20 gelangt das Glycerinwasser über die Leitung 21 in nachgeschaltete (nicht gezeichnete) Tanks. Die Brüden aus Behälter 20 werden im Kondensator 22 kondensiert und wieder als Spaltwasser eingesetzt.

Die Fettphase steigt im Gegenstrom zu den Wassertröpfchen von unten nach oben durch die Spaltkolonne 7. Durch den Einfluß der Packungsabschnitte 16 werden auch die Fetteilchen radial vermischt und es wird eine Längsvermischung unterdrückt. Am Kopf 10 des Kolonnenrohrs 15 wird die durch Spaltung entstandene Fettsäure 12 über ein Druckregelventil 23 — ggf. nach Durchlaufen des Wärmetauschers 11 — abgezogen und in einem Behälter 24 entspannt. Nach Abkühlung in einem Wärmetauscher 25 gelangt die hergestellte Fettsäure über eine Leitung 27 zu einem Tank. Die Brüden aus Behälter 24 werden im Kondensator 26 kondensiert und fließen in eine Scheidegrube.

Die Spaltkolonne nach Fig. 1 arbeitet bei einem Druck von 5,0 bis 5,5 MPa und einer Temperatur von 255 bis 265°C. Da die zugeführten Ströme von Wasser und Fett nur auf maximal 240°C aufgeheizt werden, ist die Spaltkolonne zusätzlich zu beheizen. Hierzu wird im Ausführungsbeispiel vorgesehen, in die Heizabschnitte 17 Hochdruckdampf 28 unmittelbar einzublasen. Je nach Länge der Kolonne soll mindestens in der Mitte, vorzugsweise aber auch angrenzend an den Kopf 10 und an den Sumpf 6 des Kolonnenrohr 15 ein Heizabchnitt 17 vorgesehen werden. Durch das Einblasen von Hochdruckwasserdampf wird eine hohe Turbulenz und ein feine Tropfenspektrum erzeugt. Alternativ kann in dem Heizabschnitt 17 aber auch eine indirekte Beheizung mit Dampf oder Wärmeträgeröl vorgesehen werden (vergl. Fig. 2), indem in die Heizabschnitte 17 oder an deren Umfang Wärmetauscher 29 eingebaut

3

werden. Die indirekte Beheizung ist besonder an Standorten vorteilhaft, an denen kein Hochdruckdampf zur Verfügung steht, aber trotzdem die optimal hohe Spalttemperatur erreicht werden soll.

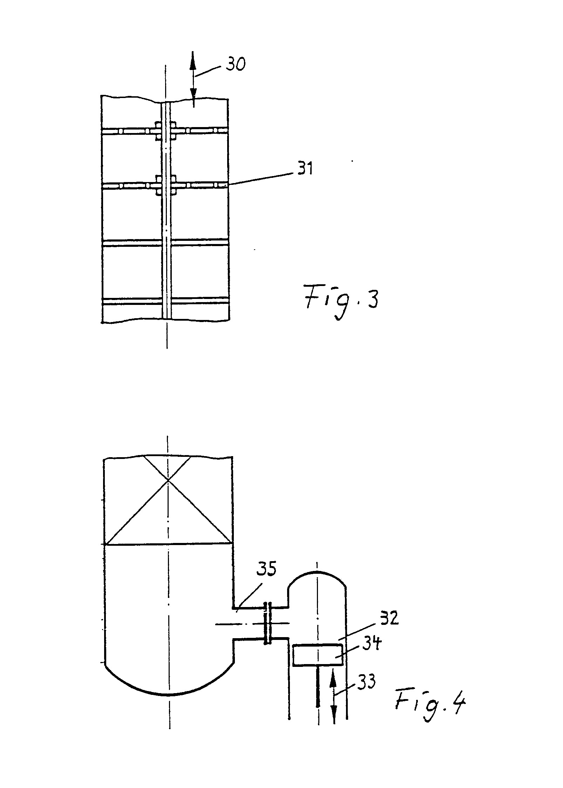

Zum Intensivieren des Stofftransports ist es günstig, die Phasenfläche zu vergrößern und die Phasengrenze dauernd zu erneuern. Vorzugsweise werden diese Ziele unterstützt durch mechanisches Pulsieren der Reaktanten. Hierzu können nach Fig. 3 in der Extraktionskolonne in Pfeilrichtung 30 zu rüttelnde Siebböden 31 vorgesehen werden. Die mechanische Energie kann aber auch durch Flüssigkeitsleitung auf die Reaktanten ausgeübt werden. Beispielsweise kann nach Fig. 4 eine Pulsationspumpe 32 mit in Pfeilrichtung 33 in Schwingungen zu versetzendem Kolben 34 über einen Stutzen 35 an den Kolonnensumpf 6 angekoppelt werden.

Im folgenden werden die Ergebnisse von in Kolonnen mit und ohne eingebaute Packungsabschnitte ausgeführten Spaltversuchen angegeben.

Die wesentlichen Einflußgrößen für die Fettspaltung sind die Temperatur, das Wasser/Fett-Verhältnis und die Verweilzeit. In der nachfolgenden Tabelle wird das Wasser/Fett-Verhältnis aus der gesamten Wassermenge einschließlich des eingespritzten Wasserdampfes und aus der Fettmenge gebildet. Unter dem Begriff "Verweilzeit" wird der Quotient aus Reaktionsvolumen zwischen Eintritt der Fettphase und Eintritt der Wasserphase und dem Volumenstrom beider Phasen einschließlich des Direktdampfes verstanden. Der Spaltgrad wird als Quotient von Säurezahl und Verseifungszahl gebildet. Sämtliche Versuche wurden mit einem 10% freie Fettsäuren enthaltenden Talg gefahren. Der Anfangsspaltgrad betrug etwa 10%.

## Tabelle

| Versuch Nr. | 1 | 2 | 3 | 4 | 5 | 6 | 7 |
|---|---|---|---|---|---|---|---|
| Einbauten | nein | nein | ja | nein | ja | nein | ja |
| Temperatur °C | 255 | 256 | 259 | 265 | 264 | 256 | 260 |
| Wasser/Fett % | 51 | 43 | 46 | 57 | 58 | 54 | 60 |
| Verweilzeit h | 2,4 | 0,9 | 1,0 | 1,3 | 1,3 | 1,1 | 1,0 |
| Spaltgrad % | 99,0 | 94,5 | 98,8 | 96,2 | 99,4 | 96,2 | 98,3 |
| Glycerin-konzentrat. % | 17 | 19 | 19 | 15 | 15 | 16 | 15 |

Die Meßergebnisse zeigen folgendes:

Ohne Einbauten, d.h. ohne die Packungsabschnitte 16 der Spaltkolonne 7 sind 2,4 h Verweilzeit erforderlich, um einen Spaltgrad von 99% zu erreichen, während bei Verwendung der Packungsabschnitte 1,3 h ausreichen um einen Spaltgrad von 99,4% zu erzielen (vergleiche Versuch Nr. 1 bzw. 4 und 5).

Bei einer Verweilzeit von ca 1 h wird durch die Füllkörpereinbauten ein um 2 bis 4% höherer Spaltgrad erzielt (vergleiche die Versuche Nr. 2 bis 7).

Bei einer Verweilzeit von ca 1 h wirkt sich die Senkung des Wasser/Fett-Verhältnisses bei Spaltkolonnen mit eingebauten Füllkörperpackungen deutlich geringer aus als bei Kolonnen mit Packung (vergleiche die Versuche Nr. 3 und 5 sowie 2 und 4).

Von wesentlicher Bedeutung für den störungsfreien Betrieb der Spaltkolonne, für die Erzielung eines hohen Spaltgrades und geringe Ölverluste im Spaltwasser bei Verwendung von Neutralölen abfallender Qualität für die Spaltung, ist die Eintrittsstelle in die Spaltkolonne.

Bei den bekannten Verfahren ist die Eintrittsstelle des Neutralöls unterhalb der Trennschicht in der Spaltkolonne (7) angeordnet.

Das in einer Vorlage sich befindliche ca. 80°C heiße Neutralöl wird hierbei durch eine Druckpumpe (2) auf den Betriebsdruck der Spaltkolonne gebracht und in diese eingeleitet. Durch entsprechenden Abstand nach unten des Eintrittstutzens für das Neutralöl zur Trennschicht, wird ein innerer Wärmeaustausch zwischen dem in der Spaltkolonne aufsteigenden Neutralöl und dem nach unten sinkenden Spaltwasser erzielt. Hierdurch kühlt sich das Spaltwasser von der Betriebstemperatur (ca. 260°C) auf ca. 150°C ab, während sich das Neutralöl entsprechend erwärmt.

Der Nachteil der bekannten Verfahren besteht darin, daß Neutralöle abfallender Qualität beim Hochsteigen durch die Trennschicht die Bildung von Emulsionen begünstigen, wodurch der stationäre Betrieb der Spaltkolonne gestört wird. Spaltgradreduzierung und Mitführung von Neutralöl in Spaltwasser sind die Folge.

Erfindungsgemäß wird deshalb die Eintrittsstelle für das Neutralöl oberhalb der Trennchichtregelung angeordnet, um das Hochsteigen des Neutralöls durch die Trennschicht zu vermeiden. Um den Nachteil des hierbei fehlenden inneren Wärmeaustauschs zu vermeiden, welcher zu einer Verdoppelung des

4

Energieverbrauchs führen würde, wurde ein äußerer Wärmeautauscher (3) installiert, über den das aus der Spaltkolonne austretende Spaltwasser geleitet wird, welches sich hierbei von ca. 260°C ebenfalls auf 110 — 170°C abkühlt. Das durch den Wärmeaustauscher geleitete Neutralöl wird von ca. 80°C entsprechend erhitzt.

Da sowohl Spaltwasser, wie auch Neutralöl zu Verkrustungen der Wärmeaustauscherflächen führen, ist der Wärmeaustaucher so auszuführen, daß beide Flächen zu reinigen sind. Bei Einsatz eines Röhrenwärmeaustauschers, der für diese Betriebsbedingungen günstig ist, müssen beispielsweise im Rohraußenraum verschließbare Reinigungsöffnungen vorhanden sein, die den Einsatz eines Hochdruckwasserreinigungerätes gestatten.

Bezugszeichenliste

1 = Fett
2 = Druckpumpe
3 = Wärmetauscher
4 = Glycerinwasser
5 = Spitzenerhitzer
6 = Sumpf
7 = Spaltkolonne
8 = Spaltwasser
9 = Druckpumpe
10 = Kopf (7)
11 = Wärmetauscher
12 = Fettsäure.
13 = oberer Teil (7)
14 = Glockenboden
15 = Kolonnenrohr
16 = Packungsabschnitt
17 = Heizabschnitt
18 = Trennschichtregelung
19 = Reduzierventil
20 = Behälter
21 = Leitung
22 = Kondensator
23 = Druckregelventil
24 = Behälter
25 = Wärmetauscher
26 = Kondensator
27 = Leitung
28 = Hochdruckdampf
29 = Wärmetauscher
30 = Pfeil
31 = Siebboden
32 = Pumpe
33 = Pfeil
34 = Kolben
35 = Stutzen

**Patentansprüche**

1. Anlage zur kontinuierlichen Fettspaltung mit einem für bei etwa 5 MPa und etwa 260°C im Gegenstrom zu aufsteigendem Fett fallendem Wasser ausgelegten Kolonnenrohr (15) einer Spaltkolonne (7), welche am Sumpf (6) einen Fetteinlaß und einen Glycerinwasserauslaß sowie am Kopf (10) einen Wassereinlaß und einen Fettsäureauslaß besitzt, mit Einbauten und mit mindestens einem Heizabschnitt (17) zum Aufheizen der im Gegenstrom bewegten Reaktanten (1, 8), dadurch gekennzeichnet, daß das Kolonnenrohr (15) für etwa 5 MPa ausgelegt ist, daß jeweils eine dem Einlaß vorgeschaltete Heizung (3, 11) und Druckpumpe (5, 9) bzw. dem Auslaß nachgeschaltetes Entspannungs- und Kühlmittel (19, 20, 22, 24) vorgesehen sind, daß mehrere, Einbauten aufweisende Abschnitte (16) und Heizabschnitte (17) in Längsrichtung des Kolonnenrohrs (15) aufeinander folgen, daß die Einbauten ein freies Volumen von mindestens 90% aufweisen und daß wenigstens einer der beiden im Gegenstrom bewegten Flüssigkeiten direkt oder über die Einbauten Mittel (31, 32) zum pulsierenden Bewegen der Reaktanten zugeordnet sind.

2. Anlage nach Anspruch 1, dadurch gekennzeichnet, daß die Heizabschnitte (17) mit Wärmeträgeröl betriebene Wärmeaustauscher (29) zum indirekten Beheizen der Reaktanten enthalten.

3. Anlage nach Anspruch 1 oder 2, dadurch gekennzeichnet, daß die Einbauten aus Siebböden bestehen.

4. Anlage nach einem der Ansprüche 1 bis 3, dadurch gekennzeichnet, daß der Eintrittsstutzen für Neutralöl oberhalb der Trennschicht der Spaltkolonne liegt.

5. Anlage nach einem der Ansprüche 1 bis 4, gekennzeichnet durch einen Wärmeaustauscher (3), der vorzugsweise ein Röhrenapparat ist, dessen beide Druckräume einer mechanischen Reinigung mittels Hochdruckwasser zugänglich ist.

6. Verfahren zur kontinuierlichen Fettspaltung in einem für bei etwa 260°C im Gegenstrom zu aufsteigendem Fett fallendem Wasser ausgelegten, Einbauten aufweisenden Kolonnenrohr (15) einer Spaltkolonne (17), deren Inhalt abschnittsweise aufgeheizt wird, wobei durch die Einbauten die in dem Kolonnenrohr (15) sinkenden Wassertröpfchen permanent umgelenkt, zerteilt und wieder zusammengeführt werden und das in dem Kolonnenrohr aufsteigende Fett bei Unterdrücken einer Längsvermischung permanent mit den Wassertröpfchen radial vermischt wird,
dadurch gekennzeichnet,
daß das Verfahren in einem für etwa 5 MPa ausgelegten Kolonnenrohr (15) durchgeführt wird und daß die Reaktanten in eine pulsierende Bewegung versetzt werden.

7. Verfahren nach Anspruch 6, dadurch gekennzeichnet, daß die Turbulenz der Reaktanten zugleich mit der Temperatur durch Einblasen von Hochdruckdampf in die Heizabschnitte erhöht wird.

8. Verfahren nach Anspruch 6 oder 7, dadurch gekennzeichnet, daß ein Wärmeaustauscherapparat (3) durch Abkühlung des unter Betriebsdruck der Spaltkolonne (7) stehenden Spaltwassers das unter Betriebsdruck der Spaltkolonne stehende Neutralöl aufheizt.

**Revendications**

1. Dispositif de dissociation des graisses en continu comportant un conduit (15) dans lequel transitent simultanément et en sens opposés, à une pression d'environ 5 MPa et à une température d'environ 260°C, un flux descendant d'eau et un flux ascendant de graisses dans une colonne de dissociation (7), laquelle colonne présente à sa base (6) une admission de graisses et une sortie d'eau glycérinée, à son sommet (10) une admission d'eau et une sortie d'acides gras, et des garnissages internes et au moins une section de chauffage (17) des réactifs (1, 8) transitant en sens opposés, caractérisé en ce que le conduit (15) de la colonne est prévu pour une pression d'environ 5 MPa, que des dispositifs de chauffage (3, 11) et des pompes de pression (5, 9) sont prévus avant les admissions, que des dispositifs de décompression et de refroidissement (19, 20, 22, 24) sont prévus après les sorties, que plusieurs sections (16) intégrant des garnissages ainsi que des sections de chauffage (17) se succèdent et alternent sur la hauteur du conduit (15), que les éléments intégrés présentent un vide volumique d'au moins 90% et que des moyens (31, 32) sont prévus pour imprimer un brassage pulsant des réactifs directement ou par le biais des garnissages à un au moins des liquides transitant en sens opposés.

2. Dispositif selon la revendication 1, caractérisé en ce que les sections chauffantes (17) contiennent des échangeurs de chaleur (29) à circulation d'huile caloporteuse assurant le chauffage indirect des réactifs.

3. Dispositif selon la revendication 1 ou 2, caractérisé en ce que les garnissages sont constitués par des plateaux de tamisage.

4. Dispositif selon l'une des revendications 1 à 4, caractérisé en ce que l'admission d'huiles neutres est située au-dessus de la couche de séparation de la colonne de dissociation.

5. Dispositif selon les revendications 1 à 4, caractérisé en ce qu'il comporte un échangeur de chaleur (3), de préférence de type multitubulaire, dont les deux enceintes à pression sont accessibles aux fins de nettoyage à haute pression d'eau.

6. Procédé de dissociation des graisses en continu dans un conduit de colonne (15), prévu pour une température d'environ 260°C, appartenant à une colonne de dissociation (17) dans laquelle transitent en sens opposés un flux ascendant de graisses et un flux descendant d'eau, dont le contenu est chauffé sur certaines portions, où le flux descendant des gouttelettes d'eau est continuellement dévié, divisé et réuni et où le flux ascendant de graisses est constamment mélangé transversalement ou radialement aux gouttelettes d'eau par l'effet de la présence, dans le conduit de la colonne (15), de garnissages empêchant en même temps le mélange longitudinal des deux flux, caractérisé en ce que le procédé est réalisé dans un conduit de colonne (15) prévu pour une pression d'environ 5 MPa et que les réactifs sont soumis à un mouvement pulsant.

7. Procédé selon la revendication 6, caractérisé en ce que les turbulences des réactifs sont augmentées en même temps que la température par l'injection de vapeur à haute pression dans les sections de chauffage.

8. Procédé selon la revendication 6 ou 7, caractérisé en ce qu'un échangeur de chaleur (3) chauffe les huiles neutres soumises à la pression opérationnelle de la colonne de dissociation (7) en refroidissant l'eau de dissociation soumises à la pression opérationnelle de la colonne de dissociation.

**Claims**

1. A plant for the continuous hydrolysis of fats comprising a tube (15), designed for water descending in countercurrent to ascending fat at around 5 MPa/260°C, of a hydrolysis column (7) which comprises at its sump (6) a fat inlet and a glycerol water outlet and at its head (10) a water inlet and a fatty acid outlet; packings and at least one heating section (17) for heating the reactants (1,8) moved in countercurrent, characterized in that the column tube (16) is designed for approximately 5 MPa, in that a heating system (3, 11) and pressure pump (5, 9) preceding the inlet and expansion and cooling means (19, 20, 22, 24) following the outlet are provided, in that several sections (16) with packings and heating sections (17) follow one another longitudinally of the column tube (15), in that the packings have a free volume of at least 90% and in that means (31, 21) for pulsating the movement of the reactants are associated with at least one of the two liquids moved in countercurrent either directly or via the packings.

2. A plant as claimed in claim 1, characterized in that the heating sections (17) contain heat exchangers (29) operated with heat carrier oil for indirectly heating the reactants.

3. A plant as claimed in claim 1 or 2, characterized in that the packings consist of sieve plates.

4. A plant as claimed in any of claims 1 to 3, characterized in that the inlets for neutral oil are situated above the separation layer of the hydrolysis column.

5. A plant as claimed in any of claims 1 to 4, characterized by a heat exchanger (3), preferably of the tube type, of which the two pressure chambers are accessible for mechanical cleaning by water under high pressure.

6. A process for the continuous hydrolysis of fats in a tube (15), designed for water descending in countercurrent to ascending fat at around 260°C, of a hydrolysis column (17) of which the contents are heated in sections, the water droplets falling through the tube (15) being permanently deflected, split up and recombined and the fat ascending through the tube (15), with longitudinal mixing suppressed, being permanently radially mixed with the water droplets, characterized in that the process is carried out in a column tube (15) designed for approximately 5 Mpa and in that a pulsating movement is imparted to the reactants.

7. A process as claimed in claim 6, characterized in that the turbulence of the reactants is increased together with the temperature by the injection of steam under high pressure into the heating sections.

8. A process as claimed in claim 6 or 7, characterized in that a heat exchanger (3) heats the neutral oil under the operating pressure of the column (7) by cooling the hydrolysis water under the operating pressure of the column (7).

Fig. 1

EP 0 243 388 B1

Fig. 2

Fig. 3

Fig. 4